Europäisches Patentamt

European Patent Office

Office européen des brevets

(19)

(11) Publication number: **0 029 069**
**B1**

## (12) EUROPEAN PATENT SPECIFICATION

(45) Date of publication of patent specification: **15.02.84**

(51) Int. Cl.³: **C 04 B 7/16, C 04 B 7/35**

(21) Application number: **79900554.1**

(22) Date of filing: **09.05.79**

(86) International application number:
**PCT/JP79/00115**

(87) International publication number:
**WO 80/02419 13.11.80 Gazette 80/26**

(54) HYDRAULIC INORGANIC COMPOSITION.

(43) Date of publication of application:
**27.05.81 Bulletin 81/21**

(45) Publication of the grant of the patent:
**15.02.84 Bulletin 84/7**

(84) Designated Contracting States:
**FR**

(56) References cited:
FR - A - 611 106
FR - A - 980 122
JP - A - 53 013 629
JP - A - 53 052 534
JP - B - 26 004 635
US - A - 2 947 643

(73) Proprietor: KABUSHIKI KAISHA KOMURO
Shinsaka 40 Bldg. 10-24, Akasaka 8-chome
Minato-ku Tokyo, 107 (JP)

(72) Inventor: TAKASE, Kiyoshi
24-16, Kamiochiai 3-chome
Shinjuku-ku Tokyo 161 (JP)
Inventor: MATUDA, Yukio
15-1-1102, Akabanekita 2-chome
Kira-ku, Tokyo 115 (JP)

(74) Representative: Casalonga, Axel
BUREAU D.A. CASALONGA OFFICE JOSSE &
PETIT Baaderstrasse 12-14
D-8000 München 5 (DE)

**The file contains technical information submitted after the application was filed and not included in this specification**

Courier Press, Leamington Spa, England.

# 0 029 069

## Hydraulic inorganic composition

### 1. Technical Field

This invention relates to a hydraulic inorganic composition having high hydraulic caking speed, and permitting the rigid hydrate thereof to exhibit a rapid curing property, exceedingly high mechanical strength, low specific gravity, high corrosion resistance and appreciable curing expansion. That is, this invention relates to an improved slag cement containing a large amount of gypsum.

### 2. Background Art

Heretofore, it has been known to the art that a hydraulic inorganic composition prepared by adding 10 to 20 parts by weight of lightly calcined anhydrous gypsum or gypsum hemihydrate and not more than 5 parts by weight of portland cement or calcium hydroxide to about 80 parts by weight of a fine powder of granulated slag of blast furnace having a potential hydraulic property, namely, a so-called "high sulfate slag cement", can be used singly as a cheap cement substantially equal in properties to portland cement, or as a mixture with portland cement. (cif. Japanese "Encyclopaedia Chimica", Vol. 5, 1961, page 204, and Japanese Patent Application Publication No. 2617/64, page 6.) However, the rigid hydrate of high sulfate slag cement of this kind tends to receive weathering on the surface thereof, so that this slag cement has been scarcely put to a practical use.

### 3. Disclosure of Invention

An object of this invention is to improve the above-mentioned high sulfate slag cement, and to provide a hydraulic inorganic composition which produces a rigid hydrate exhibiting a rapid caking and curing properties, high mechanical strength, high corrosion resistance, appreciable curing expansion and high weathering resistance, and further can be used with or without mixing of aggregate.

The object of this invention has been achieved by preparing a composition of the following components. Specifically, the composition of this invention contains, as two main components, about 80 parts by weight of fine powder of granulated blast furnace slag and about 20 parts by weight of a lightly calcined anhydrous gypsum or gypsum hemihydrate, as well as 0.1 to 5.0 parts by weight of additives including at least one compound acting as an alkaline curing activator selected from the group consisting of sodium hydroxide, potassium hydroxide, calcium hydroxide, calcium oxide, sodium carbonate, potassium carbonate and calcium carbonate, and at least another compound acting as a neutral or nearly neutral curing accelerator selected from the group consisting of magnesium hydroxide, aluminium hydroxide, magnesium oxide, aluminium oxide, sodium chloride, potassium chloride, calcium chloride, magnesium chloride, aluminium chloride, sodium sulfate, potassium sulfate, magnesium sulfate, aluminium sulfate and magnesium carbonate; the weight ratio of the alkaline curing activator to the curing accelerator ranging between 1:1 and 1:6.

In place of calcium oxide used as a curing activator mentioned above, it is possible to use portland cement containing fine free crystals of calcium oxide in the matrix of cement clinker substance.

The composition of this invention exhibits a markedly rapid caking property. Specifically, the initial and final times of hydrate caking of this composition at a temperature of 20°C are about 5 minutes and 7 minutes, respectively, as seen in many Examples hereinafter described, in contrast to about 2.5 hours and 3.5 hours for the conventional portland cement or a conventional high sulfate slag cement, respectively, and about 4 hours and 5.5 hours for a portland cement mixed with 60% by weight of fine powder of granulated slag, respectively.

The average values of bending strength and compressive strength of the rigid hydrate of the present composition mixed with sand are shown in Table 1.

TABLE 1

| Curing time | 1 hour | 1 day | 3 days | 7 days | 28 days |
|---|---|---|---|---|---|
| Bending strength (kg/cm²) | 10 | 20 | 80 | 100 | 110 |
| Compressive strength (kg/cm²) | 60 | 160 | 340 | 410 | 450 |

These mechanical strength tests were carried out in accordance with the standard method specified in JIS R 5201 for portland cement. Although the mixing ratio of cement to the standard sand being set at 1:2 for the case of portland cement, said mixing ratio was set at 1:1 in the case of this composition, and the water-cement ratio was set at 37%. The other conditions were the same as those specified in said JIS R 5201.

Table 2 shows the results of comparative tests for bending strength and compressive strength applied to the rigid hydrates of an ordinary portland cement, early high-strength portland cement and conventional high sulfate slag cement.

TABLE 2

| Strength<br>Kind<br>of cement | Bending — (kg/cm²) | | | Compressive — (kg/cm²) | | |
|---|---|---|---|---|---|---|
| | 1<br>day | 7<br>days | 28<br>days | 1<br>day | 7<br>days | 28<br>days |
| Portland cement | — | 46.8 | 69.2 | — | 206 | 404 |
| Early high-<br>strength portland<br>cement | 23.7 | 61.3 | 77.4 | 78.0 | 333 | 432 |
| Conventional<br>high sulfate<br>slag cement | 6.7 | 57.7 | 87.1 | 18.4 | 258 | 392 |

As seen from Tables 1 and 2, the cement of this invention permits achieving the one day compressive strength of the conventional early high-strength portland cement in about one hour, and also permits an increase in compressive strength with curing period of time markedly higher than those for the conventional cements.

The conventional portland cement gives rise to some shrinkage of volume in the hydration step. Therefore, the rigid hydrate of portland cement alone is always accompanied with cracks. In order to avoid the crack occurrence, at least 2 parts by weight of sand should be mixed therewith as an aggregate to 1 part by weight of the cement. This accounts for the specification of JIS R 5201 that the standard sand twice the amount of the cement should be mixed at the preparation of the cement paste.

However, a slight curing expansion is accompanied with the cement of this invention even when a paste of the cement alone is cured, so that any crack does not occur in the cured substance at all. In the test of mechanical strength with the cement of this invention mentioned afore, the mixing ratio of cement to standard sand was set at 1:1 in order to make the test conditions close to those specified in JIS R 5201. Of course it is possible practically to mix aggregates such as sand, gravel and crushed rock in view of economy with regard to the cement of this invention. However, this invention is featured in that a paste or sludge of this invented cement alone can be used as a molding, filling or wall covering material without using any aggregate. Particularly, in the case of single use of the cement of this invention, the rigid hydrate obtained exhibits mechanical strengths wonderfully higher than those in the cases of conventional aggregate-mixed cements as seen from Examples described later.

The hydraulic inorganic composition of this invention is a cement prepared by adding a small amount of hovel curing accelerator to the known slag cement containing a large amount of calcium sulfate, said slag cement containing a small amount of conventional alkaline curing activator. Although the physical or chemical reason for the above-noted prominent effects brought by the addition of a small amount of curing accelerator has not yet been clarified, it is supposed that a particular synergistic effect would be produced by the alkaline curing activator and the curing accelerator, leading to the favourable results described afore.

As mentioned previously, it is possible to mix aggregates such as sand, gravel and crushed rock with the cement of this invention. It is possible to use as the aggregate a granulated blast furnace slag, which is not pulver-ized and has an appropriate grain size. In this case, the surface of granulated slag will show a slight activity in the reaction of rigid hydrate, being advantageous over the general aggregates.

In contrast to at least 2.4 of specific gravity of the rigid hydrates of ordinary cements, the rigid hydrate of the cement alone of this invention has a specific gravity of 1.8 at most. This property of lightness is very advantageous in the design and engineering of public work and architecture in general. In addition, the rigid hydrate of this single cement forms a dense coagulation which contributes to low water permeability and high resistance to weathering for a long period of time. Furthermore, this rigid and light hydrate has a fire resistance, so that it can be used as a fire resistant material or thermal insulating material.

In general, the blast furnace slag contains as main components 30 to 35% by weight of $SiO_2$, 15 to 20% by weight of $AL_2O_3$ and 40 to 50% by weight of CaO as well as small amounts of $Fe_2O_3$ and

3

**0 029 069**

MgO. By rapid cooling of this liquid slag flown out of a blast furnance with a torrent of water, a granular substance having a particle size distribution of wide range can be obtained. This substance has a potential hydraulic property. One of the main raw materials of the cement of this invention is prepared by pulverizing the thus obtained dry granulated slag to the extent of portland cement.

If necessary, it is possible to mix a required amount of an ordinary cement as a bulk filler with the cement of this invention. The ordinary cements include portland cement, early high-strength portland cement, alumina cement, and white cement. It is also possible to add a weight saving material such as fine powder of perlite in order to make the cured cement more light weight.

When the composition of this invention is to be caked slowly, it is sufficed by adding a suitable amount of known caking retardant such as glue, gelatine, peptone, starch, sodium lignin sulfonate, sodium tartrate, sodium succinate, borax and sodium phosphate.

When the composition of this invention is used as a grouting material, which requires a rapid caking property, it is better to add thereto a suitable amount of known caking activator such as $(NH_4)_2SO_4$, $ZnSO_4$, $FeSO_4$, $CuSO_4$, $NaHSO_4$, $KHSO_4$, or colloidal silica. Since the rigid hydration of this cement accompanies some curing expansion as described previously, the composition of this invention is very suitable as a grouting material.

4. Best Mode of Carrying Out the Invention

Example 1

A composition of this invention was obtained by adding 0.5 part by weight of slaked lime as an alkaline curing activator and 1.0 part by weight of magnesia as a curing accelerator to a mixture of 80 parts by weight of granulated blast furnace slag dried and pulverized to the extent of portland cement and 20 parts by weight of by-product gypsum hemihydrate.

A paste prepared by adding 40 parts by weight of water to the composition obtained, followed by kneading, was found to exhibit a flow value of about 200 mm as determined by the method specified in JIS R 5201. The paste was also subjected to a caking test under JIS R 5201, with a result that the initial and final times of hydrate caking were found to be 5 minutes and 7 minutes, respectively.

The mechanical strengths of rigid hydrate of the paste were as follows:

| Strength \ Curing time | 1 hour | 1 day | 3 days | 7 days | 28 days |
|---|---|---|---|---|---|
| Bending — (kg/cm²) | 17.5 | 22 | 72 | 92 | 122 |
| Compressive — (kg/cm²) | 73.5 | 153 | 365 | 650 | 710 |

Such a wonderfully high mechanical strength of cured cement for pratical use has never been known in the art.

The rigid substance obtained had a specific gravity of about 1.8, whereas the specific gravity of conventional concrete was about 2.4.

Substantially the same results as the above were obtained when fine powder of calcium oxide or calcium carbonate was used instead of slaked lime as the curing activator.

Example 2

A cement paste was prepared by adding 36 parts by weight of water to a fine powder composition consisting of 80 parts by weight of granulated blast furnace slag, 20 parts by weight of by-product gypsum hemihydrate, 0.5 part by weight of slaked lime, 3 parts by weight of calcium chloride, 3 parts by weight of portland cement, and 0.2 part by weight of sodium lignin sulfonate. The paste was found to exhibit a flow value of about 200 mm, initial time of hydrate caking of about 30 minutes and final time of hydrate caking of about 45 minutes.

The mechanical strength of the rigid hydrate of this paste was as follows:

| Strength \ Curing time | 1 day | 7 days | 14 days | 28 days |
|---|---|---|---|---|
| Bending — (kg/cm²) | 25 | 110 | 140 | 148 |
| Compressive — (kg/cm²) | 183 | 480 | 620 | 730 |

4

### Example 3

A paste of cement mortar was prepared by adding 100 parts by weight of sand acting as an aggregate and 37 parts by weight of water to a fine powder composition consisting of 80 parts by weight of granulated blast furnace slag, 20 parts by weight of product gypsum hemihydrate, 0.5 part by weight of calcium hydroxide, 3 parts by weight of calcium chloride and 0.2 part by weight of sodium lignin sulfonate. The paste of cement mortar obtained was found to exhibit a flow value of 179 mm, initial time of hydrate caking of about 30 minutes and final time of hydrate caking of about 45 minutes. The mechanical strength of the rigid hydrate of this mortar was as follows:

| Strength \ Curing time | 1 day | 3 days | 7 days | 28 days |
|---|---|---|---|---|
| Bending — $(kg/cm^2)$ | 20 | 86 | 101 | 110 |
| Compressive — $(kg/cm^2)$ | 163 | 346 | 407 | 448 |

The 28 days-cured rigid substance of this cement mortar was subjected to a water permeability test by the method specified in JIS A 1401, the result being shown below. Also shown for comparison is the water permeability for the case where portland cement was used in place of the cement of this invention. In this case, the cement-sand ratio was 1:3, and the flow value was 160 mm.

$$\text{Water permeability (\%)} = \frac{\text{Amount of permeated water (g)}}{\text{Dry rigid substance before test (g)}} \times 100$$

| Cement \ Items | Water pressure $(g/cm^2)$ | Pressing time (hour) | Dried rigid sample (g) | Permeated water (g) | Water permeability (%) |
|---|---|---|---|---|---|
| This invention | 100 | 1 | 1370 | 13 | 0.95 |
| This invention | 2000 | 1 | 1370 | 22 | 1.60 |
| Portland cement | 100 | 1 | 1560 | 57 | 3.65 |

The rate of length change for the cured rigid substance of this cement mortar was measured by the method specified in JIS A 1129, the result being shown in the following table. The sample was cured under a natural atmosphere and relative humidity of 80% at a temperature of 20°C. For comparison, also shown in the following table are the test values for the case using portland cement instead of the cement of this invention. In this case, the cement-sand ratio was 1:2, and the water-cement ratio was also 1:2.

5

| Time (day) \ Cement | Rate of length change using the invented cement ($\times 10^{-4}$) | Rate of length change using portland cement ($\times 10^{-4}$) |
|---|---|---|
| Initial | 0.00 | 0.00 |
| 1 | +6.59 | 0.00 |
| 3 | +0.86 | −0.50 |
| 7 | −0.73 | −5.20 |
| 14 | −0.38 | −6.50 |
| 28 | +2.15 | −7.60 |
| 56 | +1.54 | −7.80 |

## Example 4

A cement paste was prepared by adding 20 parts by weight of fine perlite powder having an apparent specific gravity of 0.15, which was used as a weight saving material, and 45 parts by weight of water to a fine powder composition consisting of 80 parts by weight of granulated blast furnace slag, 20 parts by weight of light calcined anhydrous gypsum, 0.5 part by weight of sodium carbonate and 3 parts by weight of portland cement as a curing activator respectively, and 3 parts by weight of magnesium carbonate as a curing accelerator. The paste was found to exhibit a flow value of about 180 mm. The cured rigid substance obtained from this paste had a specific gravity of about 1.0.

The mechanical strength of the rigid hydrate obtained from this paste was a follows:

| Strength \ Curing time | 1 day | 3 days | 7 days | 28 days |
|---|---|---|---|---|
| Bending — (kg/cm²) | 17.6 | 31.3 | 43.6 | 45.3 |
| Compressive — (kg/cm²) | 45.2 | 120.5 | 140.1 | 230.2 |

## Example 5

A paste was prepared by agitating a mixture consisting of 80 parts by weight of finely pulverized granulated blast furnace slag, 20 parts by weight of gypsum hemihydrate, 0.5 part by weight of sodium sulfare, 0.5 part by weight of sodium hydroxide and 40 parts by weight of water.

The paste obtained was found to exhibit a flow value of about 200, initial time of hydrate caking of 5 minutes and final time of hydrate caking of 7 minutes.

The mechanical strength of the rigid hydrate obtained from this paste was as follows:

| Strength \ Curing time | 1 hour | 1 day | 3 days | 7 days | 28 days |
|---|---|---|---|---|---|
| Bending — (kg/cm²) | 15 | 22 | 69 | 86 | 110 |
| Compressive — (kg/cm²) | 62 | 120 | 320 | 520 | 650 |

The rigid hydrate was left exposed to the atmosphere for one year, but weathering was not apparent on the surface of rigid substances.

Substantially the same results were obtained when magnesium carbonate was used instead of sodium sulfate in the experiment mentioned above. Also, potassium hydroxide could be substituted for sodium hydroxide with similar results.

## Example 6

A cement paste was prepared by adding 80 parts by weight of portland cement as a cementing material and 70 parts by weight of water to a hydraulic composition consisting of 80 parts by weight of finely pulverized granulated blast furnace slag, 20 parts by weight of gypsum hemihydrate, 1 part by weight of calcium hydroxide and 3 parts by weight of calcium chloride.

The paste obtained was found to exhibit a flow value of about 200 mm, initial time of hydrate caking of 6 minutes and final time of hydrate caking of 10 minutes.

This mixed cement was exceedingly suitable for grouting.

The mechanical strength of the rigid hydrate of this paste was as follows:

| Curing time<br>Strength | 1<br>day | 3<br>days | 7<br>days | 28<br>days |
|---|---|---|---|---|
| Bending — (kg/cm²) | 17.7 | 48.6 | 70.6 | 120.6 |
| Compressive — (kg./cm²) | 39.3 | 141.5 | 230.2 | 52.06 |

## Example 7

A sludge of high fluidity was prepared by adding 55 parts by weight of water to a hydraulic composition of this invention consisting of 80 parts by weight of fine powder of granulated blast furnace slag, 20 parts by weight of gypsum hemihydrate, 0.5 part by weight of calcium hydroxide, 1.0 part by weight of magnesium oxide, and 0.4 part by weight of sodium lignin sulfonate, followed by stirring the mixture sufficiently. The sludge obtained was found to exhibit a flow value of 320 mm as determined by a special method.

Since this special method was not specified in JIS, the following specifically determined method was employed. That is, a cylindrical tube, of which inner diameter and height being 50 mm and 100 mm, respectively, was set up on the center of level surface of a glass plate having 500 mm × 500 mm area. After pouring the sample of the above-mentioned sludge into the cylindrical tube in full volume, only the cylindrical tube was removed promptly on the upward direction, with the result of wide spreading of the sludge on the glass plate. Then, the largest diameter of the spread and the diameter of rectangular direction thereto was measured. The average of these two diameters was acknowledged as the flow value in this case.

The sludge thus obtained was poured into an open broad box having a depth of 15 mm, so that the surface of poured sludge was naturally maintained horizontal. The sludge exhibited initial and final times of hydrate caking of about 2 hours and 3.5 hours, respectively, as well as a specific gravity of 2.0. The rigid molded mass was taken out of the open box and cured at a temperature of 20°C under a natural atmosphere for 28 days, thereby obtaining a tough-plate of light weight having a smooth surface. The plate obtained had a bending strength of 63 kg/cm² and a compressive strength of 210 kg/cm².

The above-mentioned method could permit a smooth floor finishing only by pouring the sludge onto a rough surface of concrete floor without a leveling step.

## 5. Industrial Applicability

Compared with all the conventional cements, the cement of this invention exhibits extremely rapid hydrate caking properties, and permits the provision of rigid hydrate having exceedingly high mechanical strength, low specific gravity, slight curing expansivity and freedom from weathering. Further, two main raw materials of granulated slag and gypsum are very cheap by-products of blast furnace and fuel-desulfurizing operation. There is no necessity of making a clinker with a result of fuel saving. The additives are also very cheap material. Therefore, the cement of this invention can be utilized far more effectively, efficiently and economically than ever for general engineering works, construction works, wall-coating works, production of molded articles, grouting works and repairing works in place of the conventional cements.

**Claims**

1. A hydraulic inorganic composition comprising about 80 parts by weight of finely pulverized granulated blast furnace slag and about 20 parts by weight of a lightly calcined anhydrous gypsum or gypsum hemihydrate as the main components, characterized in that it further comprises 0.1 to 5.0 parts by weight of additives including at least one compound acting as an alkaline curing activator selected from the group consisting of sodium hydroxide, potassium hydroxide, calcium hydroxide, calcium oxide, sodium carbonate, potassium carbonate and calcium carbonate and at least another component acting as a neutral or nearly neutral curing accelerator selected from the group consisting of

7

magnesium hydroxide, aluminium hydroxide, magnesium oxide, aluminium oxide, sodium chloride, potassium chloride, calcium chloride, magnesium chloride, aluminium chloride, sodium sulfate, potassium sulfate, magnesium sulfate, aluminium sulfate and magnesium carbonate, the mixing weight ratio of the curing activator to the curing accelerator ranging between 1:1 and 1:6.

2. The hydraulic inorganic composition of claim 1, characterized in that portland cement is used as a source of calcium oxide.

3. The hydraulic inorganic composition of claim 1, characterized in that said composition further includes a substantial amount of conventional cement as a bulk filler.

4. The hydraulic inorganic composition of claim 1, characterized in that said composition further includes sand, gravel or granulated blast furnace slag as an aggregate.

5. The hydraulic inorganic composition of claim 1, characterized in that said composition further includes a weight saving material.

6. The hydraulic inorganic composition of claim 5, characterized in that a fine powder of perlite is used as the weight saving material.

7. The hydraulic inorganic composition of claim 1, characterized in that the composition further includes a caking retardant.

8. The hydraulic inorganic composition of claim 1, characterized in that the composition further includes a caking activator.

## Patentansprüche

1. Eine hydraulische anorganische Zusammensetzung, enthaltend etwa 80 Gewichtsteile fein pulverisierte granulierte Hochofenschlacke und etwa 20 Gewichtsteile leicht kalzinierter wasserfreier Gips oder Gipshalbhydrat als Hauptbestandteile, dadurch gekennzeichnet, daß sie ferner enthält: 0,1 bis 5,0 Gewichtsteile Zusätze einschliesslich wenigstens einer Verbindung, die als alkalischer Abbindeaktivator wirkt und aus der Gruppe bestehend aus Natriumhydroxid, Kaliumhydroxid, Kalziumhydroxid, Kalziumoxid, Natriumkarbonat, Kaliumkarbonat und Kalziumkarbonat ausgewählt ist, und wenigstens einen anderen Bestandteil enthält, der als neutraler oder nahezu neutraler Abbindebeschleuniger wirkt und aus der Gruppe Magnesiumhydroxid, Aluminiumhydroxid, Magnesiumoxid, Aluminiumoxid, Natriumchlorid, Kaliumchlorid, Kalziumchlorid, Magnesiumchlorid, Aluminiumchlorid, Natriumsulfat, Kaliumsulfat, Magnesiumsulfat, Aluminiumsulfat und Magnesiumkarbonat ausgewählt wird wobei das Gewichts-Mischungsverhältnis des Abbindeaktivators und des Abbindebeschleunigers zwischen 1:1 und 1:6 liegt.

2. Die hydraulische anorganische Zusammensetzung aus Anspruch 1, dadurch gekennzeichnet, daß Portlandzement, als Quelle für Kalziumoxid benützt wird.

3. Die hydraulische anorganische Zusammensetzung aus Anspruch 1, dadurch gekennzeichnet, daß die Zusammensetzung ferner eine beträchtliche Menge herkömmlichen Zements als Füllmittel enthält.

4. Die hydraulische anorganische Zusammensetzung aus Anspruch 1, dadurch gekennzeichnet, daß diese Zusammensetzung ferner Sand, Kies oder granulierte Hochofenschlacke als Zuschlagstoff enthält.

5. Die hydraulische anorganische Zusammensetzung aus Anspruch 1, dadurch gekennzeichnet, daß diese Zusammensetzung ferner ein gewichtsparendes Material enthält.

6. Die hydraulische anorganische Zusammensetzung aus Anspruch 5, dadurch gekennzeichnet, daß ein feines Perlitpulver als gewichtssparendes Material eingesetzt wird.

7. Die hydraulische anorganische Zusammensetzung aus Anspruch 1, dadurch gekennzeichnet, daß die Zusammensetzung ferner ein Sinterungs-Verzögerungsmittel enthält.

8. Die hydraulische anorganische Zusammensetzung aus Anspruch 1, dadurch gekennzeichnet, daß die Zusammensetzung ferner ein Sinterungsaktivierungsmittel enthält.

## Revendications

1. Composition minérale hydraulique comprenant environ 80 parties en poids de scories de haut-fourneau, granulées, finement pulvérisées et environ 20 parties en poids de gypse anhydre ou de gypse hémihydraté, légèrement calciné, comme constituants principaux, caractérisée par le fait qu'elle comprend encore 0,1 à 5 paries en poids d'additifs comprenant au moins un composé agissant comme activateur alcalin de durcissement choisi dans le groupe constitué par l'hydroxyde de sodium, l'hydroxyde de potassium, l'hydroxyde de calcium, l'oxyde de calcium, le carbonate de sodium, le carbonate de potassium et le carbonate de calcium, et au moins un autre composé agissant comme accélérateur neutre, ou presque neutre, de durcissement choisi dans le groupe constitué par l'hydroxyde de magnésium, l'hydroxyde d'aluminium, l'oxyde de magnésium, l'oxyde d'aluminium, le chlorure de sodium, le chlorure de potassium, le chlorure de calcium, le chlorure de magnésium, le chlorure d'aluminium, le sulfate de sodium, le sulfate de potassium, le sulfate de magnésium, le sulfate d'aluminium et le carbonate de magnésium, le rapport pondéral de mélange de l'activateur de durcissement à l'accélérateur de durcissement étant comprise entre 1:1 et 1:6.

2. Composition minérale hydraulique selon la revendication 1, caractérisée par le fait que le ciment portland est utilisé comme source d'oxyde de calcium.

3. Composition minérale hydraulique selon la revendication 1, caractérisée par le fait que cette composition comprend encore une quantité importante de ciment classique comme charge volumineuse.

4. Composition minérale hydraulique selon la revendication 1, caractérisée par le fait que cette composition comprend en outre du sable, du gravier, ou des scories de haunt-fourneau, granulées, comme agrégat.

5. Composition minérale hydraulique selon la revendication 1, caractérisée par le fait que cette composition comprend en plus une matière allégeant le poids.

6. Composition minérale hydraulique selon la revendication 5, caractérisée par le fait qu'une poudre fine de perlite est utilisée comme matière allégeant le poids.

7. Composition minérale hydraulique selon la revendication 1, caractérisée par la fait que cette composition comprend aussi un retardateur d'agglutination.

8. Composition minérale hydraulique selon la revendication 1, caractérisée par le fait que cette composition comprend encore un activateur d'agglutination.